# EUROPÄISCHE PATENTSCHRIFT

(11) **EP 0 794 704 B1**
(45) Veröffentlichungstag und Bekanntmachung des Hinweises auf die Patenterteilung: **26.09.2001**
(21) Anmeldenummer: 95939283.8
(22) Anmeldetag: 15.11.1995
(51) Int. Cl.: A01N 63/04, A01N 63/00, A01N 25/12

(54) **MIKROORGANISMEN ENTHALTENDE GRANULATE**
GRANULATES CONTAINING MICRO-ORGANISMS
GRANULES CONTENANT DES MICRO-ORGANISMES

(30) Priorität: 28.11.1994 DE 4442255
(43) Veröffentlichungstag der Anmeldung: 17.09.1997
(73) Patentinhaber: BAYER AG, 51368 Leverkusen (DE)
(72) Erfinder: ANDERSCH, Wolfram, D-51469 Bergisch Gladbach (DE); HAIN, Rüdiger, D-40764 Langenfeld (DE); KILIAN, Michael, D-50739 Köln (DE)
(86) Internationale Anmeldenummer: EP9504491
(87) Internationale Veröffentlichungsnummer: WO9616547

(56) Entgegenhaltungen:
- EP-A- 0 268 177
- EP-A- 0 534 265
- WO-A-94/28725
- DD-A- 298 038
- US-A- 5 074 902

## Beschreibung

Die vorliegende Erfindung betrifft neue Schädlingsbekämpfungsmittel, die aus Mikroorganismen enthaltenden Granulaten bestehen, ihre Herstellung und Verwendung zur Bekämpfung von Schädlingen.

Es ist bereits bekannt geworden, daß bestimmte Mikroorganismen (Bakterien, Pilze und Viren) gegenüber Schädlingen, wie Insekten, Nematoden oder phytopathogenen Pilzen, pathogen sein können und somit in der Schädlingsbekämpfung verwendet werden können. Die Bereitstellung geeigneter Mikroorganismen-Zubereitungen (Formulierungen) mit einer standardisierten Wirksamkeit und einer wirtschaftlichen Anwendbarkeit stößt jedoch in vielen Fällen auf große Schwierigkeiten, weil die Formulierung der Mikroorganismen aufwendig ist und häufig ihre Wirksamkeit und Lagerstabilität nachteilig beeinflußt.

US-A 5 074 902 beschreibt ein Verfahren zum Herstellen von Granulaten, die einen pflanzenpathogenen Pilz einschließen. Dabei wird der Pilz im gesamten Granulat-Trägermaterial verteilt.

Es wurden nun neue Schädlingsbekämpfungsmittel gefunden, die aus Mikroorganismen enthaltenden Granulaten bestehen, welche dadurch gekennzeichnet sind, daß die Granulate aus Getreide-Grießteilchen mit einem mittleren Durchmesser von 0,05 bis 3,0 mm als Trägermaterial und einer dieses Trägermaterial umhüllenden Masse bestehen, die ein Klebematerial und Pilze aus der Klasse der Deuteromycetes umfaßt, und sich die Pilze auf der Oberfläche dieses Trägermaterials befinden.

Unter Schädlingsbekämpfungsmittel sollen alle erfindungsgemäßen Mittel verstanden werden, welche zur Bekämpfung von unerwünschten tierischen und pflanzlichen Schädlingen und Lästlingen (wie schädliche Arthropoden und Nematoden, Unkräuter und Ungräser, schädliche Pilze) verwendet
werden können. Im allgemeinen beruht die Wirksamkeit dieser Schädlingsbekämpfungsmittel auf der antagonistischen Fähigkeit (Parasitisierung, Toxinbildung, Konkurrenzverhalten) der verwendeten Mikroorganismen gegenüber den Schädlingen, welche zu ihrer Eindämmung oder Abtötung führt. Die Schädlingsbekämpfungsmittel werden vorzugsweise in den Bereichen Landwirtschaft, Forst, Gartenbau, Haushalt und Hygiene, Vorratsschutz und Materialschutz, insbesondere zum Schutz von Pflanzen oder Ernteprodukten eingesetzt. Bevorzugte erfindungsgemäße Schädlingsbekämpfungsmittel sind solche, die zur Bekämpfung von Schädlingen verwendet werden können, die im Bodenbereich vorkommen können.

Die Mikroorganismen müssen fähig sein, die zu bekämpfenden Schädlinge so in ihrer Lebenskraft oder in ihrer Vermehrungsfähigkeit zu beeinträchtigen, daß sie aufgrund der Einwirkung durch die Schädlingsbekämpfungsmittel ausreichend kontrolliert werden können. Hierzu müssen die erfindungsgemäß verwendbaren Mikroorganismen in der Lage sein, Stoffe in die Umgebung abzugeben, welche auf die Schädlinge entsprechend einwirken, oder aber fähig sein, die Schädlinge ausreichend zu parasitisieren.

Die erfindungsgemäß verwendeten Mikroorganismen sollen keine pathogenen Eigenschaften gegenüber Warmblütern aufweisen und darüber hinaus keine Nützlinge (z.B. Regenwürmer, Bienen) in erheblichem Ausmaß schädigen.

Unter den Mikroorganismen werden fungizide, nematopathogene und entomophathogene Mikroorganismen der Klasse Deuteromycetes bevorzugt. Besonders bevorzugt werden nematophatogene und entomophatogene Mikroorganismen.

Ganz besonders bevorzugt werden Pilze der Gattung Metarhizium, insbesondere der Art Metarhizium anisopliae und hierbei besonders die Metarhizium anisopliae Stämme P 0001 und P 0003, insbesondere der Stamm P 0001. Diese Stämme, welche erfindungsgemäß besonders günstig verwendbar sind, sind aus der EP-A-0 268 177 bekannt. Sie wurden bei der deutschen Sammlung von Mikroorganismen (DSM), Grisebachstraße, D-3400 Göttingen, Bundesrepublik Deutschlang in Übereinstimmung mit den Bestimmungen des Budapester Vertrages über die internationale Anerkennung der Hinterlegung von Mikroorganismen für die Zwecke von Patentverfahren am 24.10.1986 hinterlegt und haben die Hinterlegungsnummern:
- DMS 3884: (P 0001) und
- DMS 3885: (P 0003).

Die vorliegende Erfindung erstreckt sich auch auf die Verwendung der Mutanten und Varianten dieser Stämme, welche die für die Ausführung der Erfindung wesentlichen Merkmale und Eigenschaften aufweisen. Diese Metarhizium Stämme ergeben nach dem erfindungsgemäßen Verfahren Granulate mit sehr günstigen
biologischen Eigenschaften, welche die Verwendung dieser Granulate als Schädlingsbekämpfungsmittel ermöglichen, vorzugsweise zur Bekämpfung von Arthropoden und Nematoden, insbesondere von Insekten und Nematoden (besonders von Insekten) und ganz besonders bevorzugt von Bodeninsekten, also Insekten, welche im Boden, auf dem Boden oder am Pflanzenmaterial in der Nähe des Bodens vorkommen.

Die Mikroorganismen können in den erfindungsgemäßen Granulaten in den verschiedensten Formen und Lebensstadien vorliegen (z.B. in Form von Myzel, Sporen, Blastosporen usw.). Vorzugsweise liegen sie als Dauerformen vor, insbesondere in Form der Sporen oder Konidien.

Das Trägermaterial der erfindungsgemäßen, Mikroorganismen enthaltenden Granulate, besteht aus Getreide-Grieß.

Unter Getreide-Grieß sollen, vorzugsweise von den Schalen befreite, Getreideteilchen mit unregelmäßiger Form verstanden werden, wie sie bei der Getreidezerkleinerung entstehen. Als Getreide können die üblichen Getreidearten, wie Weizen, Hafer, Roggen, Mais, Hirse und Reis verwendet werden. Vorzugsweise wird erfindungsgemäß Weizen-Grieß eingesetzt, wobei Hartweizen-Grieß (Grieß von Durum-Weizen) ganz besonders bevorzugt wird. Die Getreide-Grieß Teilchen sind durch das Zerkleinerungsverfahren bedingt unregelmäßig geformt. Wegen der besonders günstigen Handhabbarkeit wird ein Getreide-Grieß bevorzugt, dessen Teilchen einer Kugelform möglichst nahe kommen. Vorzugsweise wird ein handelsüblicher Grieß eingesetzt. Der erfindungsgemäß zu verwendende Getreide-Grieß besteht aus Teilchen, die einen mittleren Durchmesser von 0,05 bis 3, bevorzugt von 0,1 bis 2,5 und besonders bevorzugt von 0,15 bis 2,0 mm haben. Diese Größenangaben gelten auch für das fertige Schädlingsbekämpfungsmittel.

Bei den erfindungsgemäßen Granulaten befinden sich die Mikroorganismen auf der Oberfläche des Trägermaterials, also der Getreide-Grieß Teilchen. Das bedeutet, daß die Mikroorganismen mit Hilfe von geeigneten Klebemitteln auf der Oberfläche des Trägermaterials haften, wobei die Haftfähigkeit von der Art des jeweils verwendeten Klebemittels abhängt.

Die erfindungsgemäßen Granulate bestehen aus dem Getreide-Grieß Trägermaterial und einer dieses Trägermaterial umhüllenden Masse, die sich aus einem Klebematerial, den Mikroorganismen, vorzugsweise in Form der Dauerformen (insbesondere der Sporen oder Konidien) und gegebenfalls weiteren Hilfsstoffen und gegebenfalls als Schädlingsbekämpfungsmittel geeigneten Wirkstoffen zusammensetzt.

In einer bevorzugten Ausführungsform der Erfindung enthält das Granulat (an der Oberfläche der Grieß Teilchen) 2 x 103 bis 2 x 1010, besonders bevorzugt 2 x 105 bis 2 x 108 Mikroorganismus Teilchen (vorzugsweise Sporen oder Konidien) je Gramm Granulat.

Als Klebematerialien, mit deren Hilfe die Mikroorganismen (insbesondere deren Sporen oder Konidien) an der Oberfläche der Grieß Teilchen haften, die sie also mit den Grieß Teilchen verbinden, können die üblichen natürlichen oder synthetischen Kleber verwendet werden, welche gegenüber den Mikroorganismen nicht toxisch sind. Beispielsweise können Klebemittel verwendet werden, die im Lebensmittelbereich üblich sind. Beispielhaft seien Kleber auf Cellulose-Basis (z.B. Methylcellulose), auf Stärke-Basis, Dextrane, Alginate, Agar-Agar, Gelatine, Gummi arabicum, Traganth, Casein-Leime, Glutin-Leime, Polyvinylalkohole und Polyvinylacetate sowie die Mischungen dieser Materialien genannt.

Besonders bevorzugt wird Methylcellulose eingesetzt.

Die Umhüllung der erfindungsgemäßen Granulate kann neben den Klebemitteln und den Mikroorganismen, weitere Hilfsstoffe enthalten, die selbstverständlich für die Mikroorganismen untoxisch sein müssen. Als Hilfsstoffe können beispielsweise solche eingesetzt werden, wie sie im Bereich der Nahrungsmitteltechnologie üblich sind. Als soche Hilfsstoffe seien beispielsweise Antioxidantien genannt, die die Mikroorganismen vor Oxidationsreaktionen schützen, wie Ascorbinsäure, 2,3-tert.-Butyl-4-hydroxy-anisol usw. oder Stoffe, die die Mikroorganismen vor zu starkem Austrocknen schützen, wie Polyalkohole, (z.B. Glycerin), Zucker, Lipide usw.

Als Hilfsstoffe kommen beispielsweise auch Farbstoffe in Frage, mit deren Hilfe die Dichte der Mikroorganismen auf dem Trägermaterial leicht bestimmt werden kann oder das entsprechende Produkt gekennzeichnet werden kann. Als Hilfsstoffe können gegebenfalls auch Nährstoffe (Kohlenstoff- und Stickstoffquellen) verwendet werden, die ein Wachstum der Mikroorganismen nach der Anwendung der erfindungsgemäßen Schädlingsbekämpfungsmittel erleichtern oder beschleunigen. Hierzu können beispielsweise die Nährmedien verwendet werden, welche auch bei der Heranzucht der jeweiligen Mikroorganismen eingesetzt werden.

Die jeweils besonders gut geeigneten Klebematerialien und Hilfsstoffe können durch den Fachmann leicht an Hand einfacher Routineuntersuchungen ermittelt werden. Im Hinblick auf die Notwendigkeit einer wirtschaftlichen Herstellung der erfindungsgemäßen Schädlingsbekämpfungsmittel, spielt die jeweilige günstige Verfügbarkeit der Klebemittel und der Hilsstoffe bei deren Auswahl eine große Rolle.

Weiterhin kann die Umhüllung der erfindungsgemäßen Granulate auch chemische Schädlingsbekämpfungs-Wirkstoffe enthalten, die die Wirkung der Mikroorganismen verstärken können oder das Wirkungsspektrum der Schädlingsbekämpfungsmittel erweitern können. Hierbei ist es möglich, daß auch synergistische Wirkungen zwischen den Mikroorganismen und den chemischen Wirkstoffen entstehen. Als chemische Wirkstoffe können solche Wirkstoffe eingesetzt werden, die gegenüber den jeweiligen Mikroorganismen untoxisch sind und vorzugsweise in die gleiche Wirkungsrichtung wirken. So können beispielsweise entomopathgene Mikroorganismen mit insektiziden Stoffen kombiniert werden. Der Fachmann kann an Hand von einfachen Routineuntersuchungen leicht feststellen, welche der chemischen Wirkstoffe gegenüber den jeweils eingesetzten Mikroorganismen nicht toxisch sind und somit zusätzlich auf dem Granulat enthalten sein können.

Als insektizid wirkende Stoffe können beispielsweise Phophorsäureester (z.B. Phostebupirim), Pyrethroide (z.B. Cyfluthrin und β-Cyfluthrin), Nicotinyl-Insektizide (z.B. Imidacloprid) oder Carbamate (z.B. Carbofuran) in der Umhüllung der Granulate enthalten sein. Entsprechend können die Granulate auch synthetische Fungizide oder Herbizide enthalten.

In einer ganz besonders hervorgehobenen Ausführungsform der vorliegenden Erfindung bestehen die erfindungsgemäßen Schädlingsbekämpfungsmittel aus Hartweizen-Grieß als Trägermaterial, welches durch eine Masse umhüllt ist, die im wesentlichen, aus einem Klebematerial auf Cellulose-Basis, vorzugsweise Methylcellulose, und Konidien von Pilzen der Gattung Metarhizium, insbesondere der Art Metarhizium anisopliae und ganz besonders bevorzugt der Metarhizium anisopliae Stämme P 0001 und/oder P 0003 besteht. Dieses Granulat kann besonders vorteilhaft zur Bekämpfung von Insekten, insbesondere Bodeninsekten, eingesetzt werden.

Die neuen Schädlingsbekäpfungsmittel sind mit einfachen Mitteln leicht und wirtschaftlich besonders günstig herstellbar. Darüber hinaus weisen sie, gemessen an der Menge der eingesetzten Mikroorganismen, eine überraschend hohe Wirksamkeit auf. Weiterhin zeichnen sich die neuen Mittel durch eine hohe Lagerstabilität und eine sehr einfache Handhabbarkeit (z.B. Abfüllbarkeit, Rieselfähigkeit, Dosierbarkeit und Anwendbarkeit) aus. Da die Mikroorganismen fest an die Oberfläche der Trägermaterialien gebunden sind, tritt bei der Handhabung der Mittel kaum ein eine Staubbildung auf, was besonders bei biologischen Schädlingsbekämpfungsmitteln auch aus hygienischen Gründen (insbesondere bei Allergikern) von erheblicher praktischer Bedeutung sein kann.

Zur vorliegenden Erfindung gehört auch ein Verfahren zur Herstellung der erfindungsgemäßen Schädlingsbekämpfungsmittel, welches dadurch gekennzeichnet ist, daß man in üblicher Weise, die jeweiligen Mikroorganismen (in Form der Myzelstücke, Sporen oder Konidien) in einer wäßrigen Lösung, die das Klebematerial und gegebenfalls Hilfsstoffe und gegebenfalls Schädlingsbekämpfungs-Wirkstoffe enthält, suspendiert und die Suspension mit dem Getreide-Grieß mischt, das Granulat abtrennt und trocknet.

Es ist auch möglich, die einzelnen Verfahrensschritte, welche nach den allgemein üblichen Verfahren und Methoden (wie sie in der Mikrobiologie, der Lebensmitteltechnologie und der Technologie der Pflanzenschutzmittel angewandt werden) durchgeführt werden, in einer abweichenden Reihenfolge vorzunehmen. So kann beispielweise zunächst eine Suspension der Mikroorganismen hergestellt werden und dann das Klebemittel (gegebenfalls als wäßrige Lösung oder Suspension) zugegeben werden. Es ist auch möglich, Hilfsstoffe oder Wirkstoffe in mehreren Schritten auf das Granulat aufzutragen, also beipielsweise in einem ersten Schritt die Mikroorganismen auf den Träger aufzukleben und in einem zweiten Schritt Hilfsstoffe oder Wirkstoffe hinzuzufügen. Es kann auch ein übliches Wirbenschichtverfahren verwendet werden, um die Mikroorganismen auf den Träger aufzukleben.

Die erfindungsgemäß zu verwendenden Mikroorganismen, können nach den allgemein üblichen Fermentationsverfahren erhalten werden. Die Fermentation kann mit Hilfe fester, halbfester oder flüssiger Nährmedien durchgeführt werden. Im falle der Verwendung von Sporen oder Konidien wird vorzugsweise mit festen oder halbfesten Nährmedien gearbeitet. Vorzugsweise wird mit halbfesten Nährmedien in der Oberflächenkultur gearbeitet, wobei die Fermentation beispielsweise in Schalen oder in Plastikbeuteln oder Säcken vorgenommen wird. Die Nährmedien enthalten die für die Kultivierung der jeweiligen Mikroorganismen geeigneten und bekannten Nährstoffe, insbesondere eine oder mehrere assimilierbare Kohlenstoffquellen oder Stickstoffquellen sowie Mineralsalze. Diese Produkte können in Form der Einzelbestandteile, aber auch in Form von komplexen Gemischen, wie sie insbesondere biologische Produkte verschiedenen Ursprungs darstellen, vorliegen können. Als Kohlenstoffquellen kommen alle üblichen Kohlenstoffquellen in Frage. Beispielsweise seien Kohlenhydrate, insbesondere Polysaccharide, wie Stärke oder Dextrine, Disaccharide, wie Maltose oder Rohrzucker, Monosaccharide, wie Glycose oder Xylose, Zuckeralkohole, wie Mannit oder Glycerin sowie natürlich vorkommende Gemische, wie Malzextrakt, Melasse oder Molkepulver genannt. Als Stickstoffquellen kommen alle üblichen organischen und anorganischen Stickstoffquellen in Frage. Beispielsweise seien Eiweißstoffe, Eiweißhydrolysate, Aminosäuren, wie Glutaminsäure, Asparaginsäure, Arginin, Lysin, Ornithin oder Serin, Nucleosidbasen, wie Cytosin oder Uracil sowie Sojabohnenmehl, Baumwollsamenmehl, Linsenmehl, Erbsenmehl, lösliche und unlösliche pflanzliche Proteine, Maisquellwasser, Hefeextrakt, Peptone und Fleischextrakt sowie Ammoniumsalze und Nitrate, z.B. NH₄Cl, (NH₄)₂SO₄, NaNO₃ und KNO₃ aufgeführt. Die Mineralsalze, welche im Nährmedium enthalten sein sollten, liefern z.B. folgende Ionen:

Mg⁺⁺, Na⁺, K⁺, Ca⁺⁺, NH₄⁺, Cl⁻, SO₄⁻⁻, PO₄⁻⁻⁻ und NO₃⁻

sowie Ionen der üblichen Spurenelemente, wie Cu, Fe, Mn, Mo, Zn, Co, Ni. Falls die Kohlenstoff- oder Stickstoffquellen bzw. das verwendete Wasser nicht ausreichend diese Salze bzw. Spurenelemente enthalten, ist es zweckmäßig, das Nährmedium entsprechend zu ergänzen.

Die Fermentation erfolgt bei Temperaturen zwischen etwa 15 und etwa 40°C, vorzugsweise zwischen 20 und 35°C.

Wie bereits erwähnt, kann die Erzeugung von Sporen oder Konidien (z.B. von Metarhizium, Beauveria oder Gliocladium) auf besonders vorteilhafte Weise mit Hilfe von festen oder halbfesten Nährmedien in der Oberflächenkultur erfolgen. Die Konidien oder Sporen können zu ihrer Gewinnung einfach abgeschüttelt oder mit Wasser abgeschwemmt werden, wobei zur leichteren Abschwemmbarkeit ein (vorzugsweise nichtionischer) Emulgator hinzugefügt werden kann.

In einer bevorzugten Ausführungsform des erfindungsgemäßen Verfahrens zur Herstellung der Granulate, werden die Sporen oder Konidien zunächst in Wasser suspendiert, wobei es zweckmäßig sein kann, hierbei einen nichtionischen Emulgator oder ein anderes geeignetes Dispergiermittel zur besseren Verteilung der Sporen oder Konidien zu verwenden. Die Suspension wird anschließend zu einer wäßrigen Lösung des Klebemittels (welches gegebenfalls weitere Hilfsmittel und/oder Wirkstoffe enthält) unter Rühren oder Schütteln hinzugefügt. Die so erhaltene Mikroorganismen Suspension wird anschließend mit dem als Träger dienenden Getreide-Grieß sorgfältig vermischt. Die Mikroorganismen Suspension kann auch beispielsweise in einem Fließbetttrockner auf das Trägermaterial aufgesprüht werden.

Falls statt Sporen oder Konidien Myzelstückchen eingesetzt werden sollen, wird das Myzel in üblicher Weise von der Fermentationsbrühe abgetrennt und, gegebenenfalls nach dem Trocknen, zerkleinert. Die Mycelstückchen werden dann in einer zum oben beschriebenen Vorgehen mit Sporen oder Konidien analogen Weise auf das Trägermaterial aufgebracht.

Zur Vermeidung von Kontaminationen der Zellgranulate durch unerwünschte Mikroorganismen, die durch ihre Stoffwechselaktivitäten eine Verminderung der Qualität bzw. eine Zerstörung des Produktes verursachen könnten, werden alle Arbeitsschritte bei der Granulatherstellung (und gegebenenfalls auch die weitere Verarbeitung) zweckmäßigerweise unter sterilen Bedingungen durchgeführt.

Zur Trocknung der Granulate können die üblichen Methoden zur Trocknung von biologischem Material mittels Wärmeübertragung durch Konvektion, wie z.B. die Verfahren der Zerstäubungs-, Strom- und Fließbetttrocknung oder mittels Wärmeübertragung durch Kontakt, wie z.B. die Verfahren der Teller-, Schaufel-, Taumel-, Band-, Walzen-, Vakuumkammer- und Vakuumgefriertrocknung eingesetzt werden. Der Trocknungsprozeß kann auch aus einer Kombination von zwei oder mehreren dieser Verfahren bestehen. Die Dehydratation der Granulate wird im diskontinuierlichen oder kontinuierlichen Verfahren, vorzugsweise jedoch im diskontinuierlichen Verfahren durchgeführt. Die Verfahren sind im einzelnen derart auszugestalten, daß die Lebensfähigkeit der Mikroorganismen auf den Granulaten über einen möglichst langen Zeitraum hinweg gewährleistet ist. Ferner ist bei der Trocknung der Granulate zu beachten, daß die mechanische Belastung der Granulate möglichst gering gehalten wird.

Wie bereits erwähnt, kann es zum Schutz der Mikroorganismen auf den Granulaten vor Schädigungen, wie sie während des Trocknungsprozesses in Folge einer Temperaturerniedrigung oder Temperaturerhöhung bzw. durch eine zu intensive Dehydration entstehen können, zweckmäßig sein, die Granulate vor der Trocknung mit entsprechenden Schutzsubstanzen vorzubehandeln. Hierzu eignen sich für diesen Verwendungszweck bekannte organische oder anorganische Substanzen, die in definierter Form oder als komplexes Gemisch eine protektive Wirkung erzielen, z.B. Polyalkohole, wie Zucker oder Glycerin. Die Behandlung erfolgt mit den üblichen Methoden durch Tauchen, Waschen, Besprühen oder Mischen der Granulate mit den Schutzmitteln.

Ein Schutz der Mikroorganismen auf den Granulaten vor unkontrollierten Oxidationsreaktionen kann durch eine Behandlung der noch nicht getrockneten Granulate mit untoxischen antioxidativen Stoffen, wie z.B. Ascorbinsäure, 2,3-tert.-Butyl-4-hydroxy-anisol, 2,6-Di-tert.-butyl-p-cresol, Porpylgallate oder Nordihydroguaiaretsäure erreicht werden. Die Behandlung erfolgt mit Hilfe der üblichen Methoden durch Tauchen, Waschen, Besprühen oder Mischen der Granulate mit den Schutzmitteln.

Zur Entwicklung einer raschen biologischen Aktivität in der Schädlingsbekämpfung können die Granulate vor der Trocknung auch mit Materialien behandelt werden, die die Rehydration der Mikroorganismen unterstützen. Hierzu eignen sich alle untoxischen hygroskopisch wirkenden Materialien, insbesondere Polyalkohole wie Glycerin, Zucker, Zuckerpolymere oder Derivate der Zuckerpolymere.

Zur Aktivierung und Intensivierung der biologischen Wirkung insbesondere in der Schädlingsbekämpfung kann es auch zweckmäßig sein, daß die Granulate vor der Trocknung mit Nährstoffen behandelt werden, die eine rasche Vermehrung der Mikroorganismen und somit eine dichtere Besiedlung des Wirkortes unterstützen.

Als nährstoffartige Substanzen eignen sich alle assimilierbaren Kohlen- und Stickstoffquellen, wie sie auch zur Anzucht bzw. bei der Fermentation des entsprechenden Mikroorganismus genutzt werden können.

Die Lagerung der erfindungsgemäßen Granulate erfolgt in geschlossenen Behältern unter trockenen Bedingungen, vorzugsweise bei Temperaturen zwischen 0° und 25°C. Zur Eerhaltung der Lebensfähigkeit der Mikroorganismen in den Granulaten kann es zweckmäßig sein, die Granulate unter Ausschluß von Sauerstoff zu lagern, wie z.B. durch Lagerung unter einer Atmosphäre aus Stickstoff, Kohlendioxid oder anderen inerten Gasen, bzw. aus Gasgemischen der genannten Gase, ferner kann der Ausschluß des Sauerstoffs durch Verpackung der Granulate unter Bedingungen des Unterdrucks erreicht werden. Gegebenenfalls kann es auch zweckmäßig sein, der Verpackung Trockenmittel, z.B. Silica-Gel beizufügen, um die Lebensfähigkeit der Mikroorganismen zu erhöhen.

Die erfindungsgemäßen Schädlingsbekämpfungsmittel können bei der Verwendung entsprechender Mikroorganismen zur Bekämpfung von tierischen Schädlingen, vorzugsweise Arthropoden und Nematoden, insbesondere Insekten und Spinnentieren angewendet werden, die in der Landwirtschaft, in Forsten, im Gartenbau, im Vorrats- und Materialschutz sowie auf dem Hygienesektor vorkommen.

Sie sind gegen normal sensible und resistente Arten sowie gegen alle oder einzelne Entwicklungsstadien wirksam. Zu den oben erwähnten Schädlingen gehören:
Aus der Ordnung der Isopoda z.B. Oniscus asellus, Armadillidium vulgare, Porcellio scaber.
Aus der Ordnung der Diplopoda z.B. Blaniulus guttulatus.
Aus der Ordnung der Chilopoda z.B. Geophilus carpophagus, Scutigera spec.
Aus der Ordnung der Symphyla z.B. Scutigerella immaculata.
Aus der Ordnung der Thysanura z.B. Lepisma saccharina.
Aus der Ordnung der Collembola z.B. Onychiurus armatus.
Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Malanoplus differentialis, Schistocerca gregaria. Aus der Ordnung der Dermaptera z.B. Forficula auricularia.
Aus der Ordnung der Isoptera z.B. Reticulitermes spp.
Aus der Ordnung der Anoplura z.B. Phylloxera vastatrix, Pemphigus spp., Pediculus humanus corporis, Haematopinus spp., Linognathus spp.
Aus der Ordnung der Mallophaga z.B. Trichodectes spp., Damalinea spp.
Aus der Ordnung der Thysanoptera z.B. Hercinothrips femoralis, Thrips tabaci.
Aus der Ordnung der Heteroptera z.B. Eurygaster spp., Dysdercus intermedius, Piesma quadrate, Cimex lectularius, Rhodnius prolixus, Triatoma spp.
Aus der Ordnung der Homoptera z.B. Aleurodes brassicae, Bemisia tabaci, Trialeurodes vaporariorum, Aphis gossypii, Brevicaryne brassicae, Cryptomyzus ribis, Aphis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Naphotettix cincticeps, Lecanium corni, Saissetia oleae, Laodelphax striatellus, Nilaparvata lugens, Aonidiella aurantii, Aspidiotus hederae, Pseudococcus spp. Psylla spp.
Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp. Bucculatrix thurberiella, Phyllocnistis citrella, Agrotis spp., Euxoa spp., Feltia spp., Earias insulana, Heliothis spp., Spodoptera exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.
Aus der Ordnung der Coleoptera z.B. Anobium punctatum, Rhizopertha dominica, Acanthoscelides obtectus, Acanthoscelides obtectus, Hylotrupes bajulus, Agelastica alni, Leptinotarsa decemlineata, Phaedon cochlearia, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.
Aus der Ordnung der Hymenoptera z.B. Diprion spp., Hoplocampa spp., Lasius spp., Monomorium pharaonis, Vespa spp.
Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit, Phorbia spp., Pegomyia hyoscyami, Ceratitis capitata, Dacus oleae, Tipula paludosa.
Aus der Ordnung der Siphonaptera z.B. Xenopsylla cheopis, Ceratophyllus spp.
Aus der Ordnung der Arachnida z.B. Scorpio maurus, Latrodectus mactans.
Aus der Ordnung derAcarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Zu den pflanzenparasitären Nematoden gehören Pratylenchus spp., Radopholus similis, Ditylenchus dipsaci, Tylenchulus semioenetrans, Heterodera spp., Globodera spp., Meloidogyne spp., Aphelenchoides spp., Longidorus spp., Xiphinema spp., Trichodorus spp..

Bevorzugt werden die neuen Schädlingsbekämpfungsmittel zur Bekämpfung von Insekten und Nematoden, vorzugsweise Insekten, welche im oder am Boden (bzw. in Bodennähe) vorkommen (Bodeninsekten), verwendet.

Die Schädlingsbekämpfungsmittel können auch in Fallen, gegebenenfalls nach der Zumischung von Köderstoffen oder Lockstoffen eingesetzt werden.

Die erfindungsgemäßen Schädlingsbekämpfungsmittel können bei der Verwendung entsprechender Mikroorganismen zur Bekämpfung von schädlichen Pilzen eingesetzt werden.

Beispielhaft aber nicht begrenzend seien einige Erreger von pilzlichen Erkrankungen, die unter die oben aufgezählten Oberbegriffe fallen, genannt:
Pythium-Arten, wie beispielsweise Pythium Ultimum;
Phytophthora-Arten, wie beispielsweise Phytophthora cactorum;
Fusarium-Arten, wie beispielsweise Fusarium oxysporum;
Botrytis-Arten, wie beispielsweise Botrytis cinerea;
Pseudocercosporella-Arten, wie beispielsweise Pseudocercosporella herpotrichoides;
Rhizoctonia-Arten, wie beispielsweise Rhizoctonia solani;
Sclerotium-Arten, wie beispielsweise Sclerotium rolfsii;
Sclerotinia-Arten, wie beispielsweise Sclerotinia sclerotiorum;
Verticillium-Arten, wie beispielsweise Verticillium alboatrum;
Phialophora-Arten, wie beispielsweise Phialophora cinerescens;
Phomopsis-Arten, wie beispielsweise Phomopsis sclerotioides.

Die erfindungsgemäßen Schädlingsbekämpfungsmittel können beim Einsatz geeigneter Mikroorganismen auch als Defoliants, Desiccants, Krautabtötungsmittel und insbesondere als Unkrautvernichtungsmittel verwendet werden. Unter Unkraut im weitesten Sinne sind alle Pflanzen zu verstehen, die an Orten aufwachsen, wo sie unerwünscht sind. Die Selektivität der Herbizide hängt im wesentlichen von der jeweils angewendeten Menge ab.

Die erfindungsgemäßen Mittel können z.B. bei den folgenden Pflanzen verwendet werden:

Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffe ist jedoch keineswegs auf diese Gattungen beschränkt, sondern erstreckt sich in gleicher Weise auch auf andere Pflanzen.

Die Verbindungen eignen sich in Abhängigkeit von der Konzentration zur Unkrautbekämpfung z.B. auf Industrie- und Gleisanlagen und auf Wegen und Plätzen mit und ohne Baumbewuchs, ebenso zur Unkrautbekämpfung in Dauerkulturen, z.B. Forst, Ziergehölz-, Obst-, Wein-, Citrus-, Nuß-, Bananen-, Kaffee-, Tee-, Gummi-, Ölpalm-, Kakao-, Beerenfrucht- und Hopfenanlagen und zur selektiven Unkrautbekämpfung in einjährigen Kulturen.

Die erfindungsgemäßen Mittel können auch in Mischung mit bekannten anderen Schädlingsbekämpfungsmitteln wie Insektiziden, Akariziden, Nematiziden, Schutzstoffen gegen Vogelfraß, Pflanzennährstoffen, Herbiziden und Bodenstrukturverbesserungsmitteln Verwendung finden.

Die Anwendung der erfindungsgemäßen Mittel geschieht in üblicher Weise, vorzugsweise durch Streuen oder Einarbeitung in die Erde. Besonders bevorzugt werden die erfindungsgemäßen Mittel ohne eine weitere Formulierung angewendet, wobei die Anwendung vorzugsweise durch Einarbeitung in die Erde erfolgt.

Die angewandte Menge der Mittel kann in einem größeren Bereich schwanken. Sie hängt im wesentlichen von der Art des gewünschten Effektes und der Art der eingesetzten Mikroorganismen ab. Im allgemeinen liegen in den Bereichen Landwirtschaft, Forsten und Gartenbau die Aufwandmengen zwischen 0,1 und 50 kg Mittel pro Hektar Bodenfläche, vorzugsweise zwischen 1 und 25 kg pro ha. Vorzugsweise dienen die erfindungsgemäßen Schädlingsbekämpfungsmittel zur Bodenbehandlung. Hierbei werden vorzugsweise Schädlinge, insbesondere Insekten, bekämpft, welche im Bereich des Bodens vorkommen können.

Die vorliegende Erfindung soll anhand der folgenden Beispiele erlätuert werden. Alle Prozentangaben beziehen sich, wo nichts anderes angegeben wird, auf Gewichtsprozente.

### Beispiel A ( Herstellung eines Granulates)

1. Anzucht von Konidien
   Hafermehlagar (Zusammensetzung: 30g Haferflocken und 20g Agar) in einer Petrischale wird mit 3 Wochen alten Konidien des Metarhizium anisopliae Stammes P 0001 (DSM 3884) angeimpft. Zur Vermehrung der Konidien wird die Schale bei 22 bis 25°C 5 Tage im Brutschrank aufbewahrt.
2. Herstellung einer Konidiensuspension
   Vom Agar der Petrischale (vgl. oben) werden die gebildeten Konidien durch Abschütteln in einen 300 ml Erlenmeyerkolben gebracht und mit 50 ml Wasser, welches 1% (Gew.-%) eines nichtionischen Emulgators auf Basis Polyoxyethylen(20)-sorbitanmonolaurat (Tween® 20, Warenzeichen der ICI America, Inc.) etwa 1 - 2 Stunden bei 700 UPM gerührt bis eine Suspension erhalten wird, in welcher die Konidien als einzelne Partikel vorliegen.
   Der Konidientiter wird mit Hilfe einer NEUBAUER-Kammer bestimmt. Er betrug im vorliegenden Fall 5 x 10⁹ Konidien/ml.
3. Herstellung der auf das Trägermaterial aufzubringenden Konidien Suspension
   1 g Methylcellulose (Mowiol® 3-83) werden in 45 ml Wasser bei max. 50°C gelöst. Zudieser Lösung kann 1g Ponceau 4RC70 hinzugefügt werden. Das Hinzugeben dieses roten Farbstoffes ist optional und für das Herstellungsverfahren unwesentlich und kann somit ohne nachteiliges Ergebnis auch unterbleiben.
   In die so erhaltene Lösung werden nach dem Abkühlen 5 ml der gemäß 2. oben erhaltenen Konidiensuspension gegeben und gut verrührt.
4. Herstellung des Granulates
In 50 g Hartweizen Grieß, welcher sich in einem 250 ml Becherglas befindet, werden 5 ml der gemäß 3. oben erhaltenen Suspension rasch untergerührt bis der Grieß die Flüssigkeit weitestgehend aufgenommen hat und eine homogene Verteilung stattgefunden hat (dies kann mit Hilfe des gegebenfalls zugefügten Farbstoffes besonders leicht kontrolliert werden).
   Das entstandene Granulat wird mit Hilfe eines Siebes von der Flüssigkeit abgetrennt und bei 25°C in einem Trockenschrank getrocknet.
   Das erhaltene Granulat kann beispielsweise unter Vakuum in Aluminiumbeuteln, z.B. bei einer Temperatur von 4°C, aufbewahrt werden.
   Das auf diese Weise erhaltene Produkt weist die folgende Zusammensetzung auf (%-Angaben sind Gew.-%):
   5 x 10⁷ Konidien je g Granulat
   0,2 % Methylcellulose
   gegebenfalls: 0,2 % Ponceau 3-83
   0,01 % Emulgator (Tween® 20)
   Rest auf 100 %: Hartweizen Grieß

Der in den Beispielen eingesetzte Hartweizen Grieß weist die folgenden Eigenschaften auf:
Er enthält:
69 % Kohlehydrate
12 % Eiweißstoffe
4,5 % Gesamtballaststoffe
0,7 % Mineralstoffe
Rest: Wasser und nicht definierte Stoffe.
1 g Hartweizen grieß besteht aus etwa 14 000 Partikeln.
Ein Partikel trägt etwa 3500 Konidien

### Beispiel B (bioloische Wirksamkeit)

### Beispiel B1

Testinsekt: Otiorhynchus sulcatus I.2-I.3 (Dickmaulrüßler)
Testgranulat: Granulat mit Metarhizium anisopliae (erhältlich gemäß Beispiel A)

### Versuchsansatz:

Das Granulat wird mit handelsüblichen Mischgeräten unter die Versuchserde gemischt. Der Versuchsboden besteht aus einem in der Praxis üblichen torfhaltigen Erdsubstrat. Die Konzentration des Granulates im Boden wird in ppni (mg/l, G/V-%) angegeben.

Chrysanthemenstecklinge (T3-Topfballen) werden in Kunststofftöpfe (11 cm Durchmesser) mit der zuvor behandelten Erde getopft. Die Infektion erfolgt mit den Insekten, indem pro Topf 5 Dickmaulrüßlerlarven (L.2-L.3) in vorbereitete Löcher gegeben wurden. Die Inkubation der Pflanzen erfolgt im Gewächshaus bei 20°C und 80 % rel. Luftfeuchte.

Die Auswertung der Töpfe erfolgte nach 4 Wochen nach der Anzahl toter Insekten. Der Wirkungsgrad nach Abbott beträgt 100, wenn alle Insekten abgetötet worden sind, er beträgt 0, wenn noch genauso viele Insekten leben, wie in der unbehandelten Kontrolle.

### Ergebnisse

| Granulatkonzentration in ppm | Wirkungsgrad nach Abbott |
|---|---|
| 1600 | 82 |

### Beispiel B2

Testinsekt: Tenebrio molitor
Granulat: Granulat mit Metarhizium anisopliae (erhältlich gemäß Beispiel A)

### Versuchsansatz

Das Granulat wird mit handelsüblichen Mischgeräten unter die gesiebte Versuchserde gemischt. Als Substrat wird handelsübliche torfhaltige Erde verwendet. Die Feuchtigkeit der Erde beträgt 40 % RF. Die Konzentration der Granulate im Boden ist in ppm (mg/l, G/V %) angegeben.

Die gesiebte, mit Granulaten versehene Erde wird in transparente Polystyroldosen abgefüllt (100 ml/Dose), mit je 10 Tenebriolarven (d = 1,4-1,8 mm) besetzt und mit einem Lochdeckel verschlossen. Die Dosen werden bei 20°C und 100 % rel. Luftfeuchte inkubiert. Je Variante werden 4 Dosen mit jeweils 10 Insekten verwendet.

Die Auswertung erfolgt nach der Anzahl lebender bzw. toter Insekten und wird als Wirkungsgrad (WG) nach Abbott angegeben.

Der Wirkungsgrad beträgt 100, wenn alle Insekten abgetötet worden sind, er beträgt 0, wenn noch genauso viele Insekten leben, wie in der unbehandelten Kontrolle.

### Ergebnisse

| Granulatkonzentration in ppm | WG |
|---|---|
| 800 | 100 |
| 400 | 97 |
| 200 | 83 |

## Patentansprüche

1. Schädlingsbekämpfungsmittel, die aus Mikroorganismen enthaltenden Granulaten bestehen, **dadurch gekennzeichnet, daß** die Granulate aus Getreide-Grießteilchen mit einem mittleren Durchmesser von 0,05 bis 3,0 mm als Trägermaterial und einer dieses Trägermaterial umhüllenden Masse bestehen, die ein Klebematerial und Pilze aus der Klasse der Deuteromycetes umfaßt, und sich die Pilze auf der Oberfläche dieses Trägermaterials befinden.

2. Schädlingsbekämpfungsmittel gemäß Anspruch 1, wobei die das Trägermaterial umhüllende Masse weitere Hilfsstoffe und/oder als Schädlingsbekämpfungsmittel geeignete Wirkstoffe umfaßt.

3. Schädlingsbekämpfungsmittel gemäß den Ansprüchen 1 oder 2, wobei das Trägermaterial aus Grieß von Weizen, Hafer, Roggen, Mais oder Reis besteht.

4. Schädlingsbekämpfungsmittel gemäß Anspruch 3, wobei das Trägermaterial aus Grieß von Hartweizen besteht.

5. Schädlingsbekämpfungsmittel gemäß einem der Ansprüche 1 bis 4, welche zur Bekämpfung von Arthropoden und Nematoden, vorzugsweise von Insekten geeignet sind, wobei die Pilze aus der Gattung Metarhizium, vorzugsweise der Art Metarhizium anisopliae, ausgewählt sind.

6. Schädlingsbekämpfungsmittel gemäß Anspruch 5, wobei die Pilze ausgewählt sind aus dem Metarhizium anisopliae Stamm P 0001, entsprechend DSM 3884, oder P 0003, entsprechend DSM 3885, oder deren Mutanten und Varianten.

7. Verwendung der Mittel gemäß einem der Ansprüche 1 bis 6 zur Bekämpfung von Schädlingen.

8. Verwendung gemäß Anspruch 7 zur Bekämpfung von Arthropoden und Nematoden, vorzugsweise von Insekten.

9. Verfahren zur Bekämpfung von Schädlingen, vorzugsweise von Arthropoden und Nematoden, insbesondere von Insekten, **dadurch gekennzeichnet, daß** man die Schädlingsbekämpfungsmittel gemäß einem der Ansprüche 1 bis 6 auf die Schädlinge oder in ihren Lebensraum ausbringt.

10. Verfahren zur Herstellung der Schädlingsbekämpfungsmittel gemäß einem der Ansprüche 1 bis 6, **dadurch gekennzeichnet, daß** man in üblicher Weise, die jeweiligen Pilze in einer wäßrigen Lösung, die das Klebematerial und gegebenenfalls Hilfsstoffe und gegebenenfalls Schädlingsbekämpfungsmittel-Wirkstoffe enthält, suspendiert und die Suspension mit dem Getreide-Grießteilchen mischt, das Granulat abtrennt und trocknet.

## Claims

1. Pesticides consisting of granules comprising microorganisms, the granules consist of semolina particles having a mean diameter of 0.05 to 3.0 mm as carrier material and a material coating this carrier material which comprises an adhesive and fungi from the class of the Deuteromycetes, and the fungi are located on the surface of this carrier material.

2. Pesticides according to Claim 1, in which the material coating the carrier material comprises further auxiliaries and/or active compounds suitable as pesticides.

3. Pesticides according to Claims 1 or 2, in which the carrier material consists of the semolina of wheat, oats, rye, maize or rice.

4. Pesticides according to Claim 3, in which the carrier material consists of the semolina of durum wheat.

5. Pesticides according to one of Claims 1 to 4 suitable for controlling arthropods and nematodes, preferably insects, in which fungi from the genus Metarhizium, preferably of the species Metarhizium anisopliae, are selected.

6. Pesticides according to Claim 5, in which the fungi are selected from the Metarhizium anisopliae strain P 0001 corresponding to DSM 3884 or P 0003 corresponding to DSM 3885 or their mutants and variants.

7. Use of compositions according to one of Claims 1 to 6 for controlling pests.

8. Use according to Claim 7 for controlling arthropods and nematodes, preferably insects.

9. Method for controlling pests, preferably arthropods and nematodes, in particular insects, **characterized in that** the pesticides according to one of Claims 1 to 6 are applied to the pests or their habitat.

10. Process for preparing the pesticides according to one of Claims 1 to 6, **characterized in that** the respective fungi are suspended in a customary manner in an aqueous solution containing the adhesive and optionally auxiliaries and optionally pesticidally active compounds and the suspension is mixed with the semolina particles, the granules are separated off and dried.

## Revendications

1. Parasiticides qui consistent en un granulé contenant des micro-organismes, **caractérisés en ce que** les granulés consistent en des particules de gruau de céréales avec un diamètre moyen allant de 0,05 à 3,0 mm comme matière support et en une masse enrobant cette matière support, qui se compose d'un agent collant et de champignons de la classe des Deutéromycètes, et en ce que les champignons se trouvent à la surface de cette matière support.

2. Parasiticides suivant la revendication 1, **caractérisés en ce que** la masse enrobant la matière support, comprend d'autres additifs et/ou agents actifs appropriés comme parasiticide.

3. Parasiticides suivant la revendication 1 ou 2, où la matière support consiste en du gruau de blé, d'avoine, de seigle, de maïs ou de riz.

4. Parasiticides suivant la revendication 3, où la matière support consiste en du gruau de blé dur.

5. Parasiticides suivant l'une quelconque des revendications 1 à 4, qui sont appropriés pour lutter contre les arthropodes et nématodes, de préférence des insectes, où les champignons sont choisis parmi l'ordre des *Metarhizium*, de préférence du type *Metarhizium anisopliae.*

6. Parasiticides suivant la revendication 5, où les champignons sont choisis parmi les souches P 0001, correspondant à DSM 3884, ou P 0003, correspondant à DSM 2885, de *Hetarhizium anisopliae* ou leurs mutants et variants.

7. Utilisation de l'agent suivant l'une quelconque des revendications 1 à 6, pour lutter contre les parasites.

8. Utilisation suivant la revendication 7, pour lutter contre les arthropodes et nématodes, de préférence des insectes.

9. Procédé de lutte contre les parasites, de préférence contre les arthropodes et nématodes, en particulier des insectes, **caractérisé en ce que** l'on applique le parasiticide suivant l'une quelconque des revendications 1 à 6 sur les parasites ou dans leur biotope.

10. Procédé de préparation du parasiticide suivant l'une quelconque des revendications 1 à 6, **caractérisé en ce que** l'on met en suspension, de manière usuelle, le champignon approprié dans une solution aqueuse, qui contient l'agent collant, facultativement les additifs et facultativement, les agents actifs parasiticides, en ce que la suspension est mélangée aux particules de gruau de céréale et en ce que le granulé est séparé et séché.
